# EUROPÄISCHE PATENTSCHRIFT

(11) **EP 2 580 493 B1**
(45) Veröffentlichungstag und Bekanntmachung des Hinweises auf die Patenterteilung: **17.12.2014**
(21) Anmeldenummer: 11733563.8
(22) Anmeldetag: 27.05.2011
(51) Int. Cl.: F16H 55/08, F16H 1/00, B23F 9/00

(54) **TRAGFÄHIGKEITSOPTIMIERTE KEGELRADVERZAHNUNG**
LOAD RATING OPTIMISED BEVEL GEAR TOOTHING
DENTURE À ROUE CONIQUE OPTIMISÉE AU NIVEAU DE LA CAPACITÉ DE CHARGE

(30) Priorität: 27.05.2010 DE 102010021771
(43) Veröffentlichungstag der Anmeldung: 17.04.2013
(73) Patentinhaber: Schottel GmbH, 56322 Spay/Rhein (DE); Technische Universität Dresden Fakultät Maschinenwesen Institut für Maschinenelemente und Maschinenkonstruktion, 01062 Dresden (DE)
(72) Erfinder: POTTS, Michael, 23966 Wismar (DE); SCHLECHT, Berthold, 23942 Tankenhagen (DE); SENF, Michael, 01454 Radeberg (DE); SCHAEFER, Steffen, 01069 Dresden (DE); HUTSCHENREITER, Birgit, 01458 Ottendorf-Okrilla (DE)
(74) Vertreter: Cohausz Hannig Borkowski Wißgott
(86) Internationale Anmeldenummer: PCT/EP2011/002626
(87) Internationale Veröffentlichungsnummer: WO 2011/147582

(56) Entgegenhaltungen:
- WO-A-2004/102036
- DE-A- 2 320 340
- US-A- 2 311 006
- US-A- 6 050 883

## Beschreibung

Die Erfindung betrifft ein Zahnrad eines Kegelradgetriebes, dessen Zähne jeweils eine Lastflanke und eine Rückflanke aufweisen und ein Herstellungsverfahren hierzu. Das gattungsgemäße Dokument DE 2320340A zeigt ein Zahnrad nach dem Oberbegriff des Anspruchs 1.

In der Regel erfolgt die Gestaltung der Zahngeometrie von Kegelrädern symmetrisch bezogen auf eine durch den Zahnradmittelpunkt und in radialer Richtung durch den Zahn verlaufende Symmetrieachse. Dies ist darin begründet, dass Zahnräder in der Regel für beide Laufrichtungen (vorwärts und rückwärts) gleich konstruiert und hergestellt werden.

Je nach Laufrichtung hat ein einzelner Zahn bei der Drehmomentübertragung eine Lastflanke, welche im Eingriff ist und das Drehmoment auf die Lastflanke des Gegenzahnes überträgt, und eine Rückflanke. Die Rückflanke eines Zahnes kommt bei einer Umdrehung des Zahnrades teilweise oder gar nicht in Kontakt mit dem nachfolgenden Gegenzahn des damit kämmenden Zahnrades, solange keine Drehrichtungsumkehr erfolgt.

In der Praxis ist bei Zahnradgetrieben oft keine Drehrichtungsumkehr notwendig. Trotzdem werden die Flanken der einzelnen Zähne eines Zahnrades für beide Drehrichtungen identisch gefertigt und weitergehend bearbeitet.

Um die maximal mögliche Kraftübertragung eines Zahnrades zu vergrößern, gibt es verschiedene Ansätze. Zum einen kann die Oberfläche einer Wärmebehandlung unterzogen werden, um Zahnflankenschäden zu verhindern. Zahnflankenschäden treten zum Beispiel durch unzulässig hohe Pressungen auf. Hierzu wird u. a. im Anschluss an die Herstellung der Zahngeometrie die Oberfläche des Zahnes veredelt, d. h. oberflächenvergütet oder gehärtet. Zum anderen wird in anderen Ansätzen die Zahnform, deren Bezugsprofil durch DIN 867 genormt ist, optimiert.

Aufgabe der Erfindung ist es, ein Kegelzahnrad der eingangs genannten Art so zu optimieren, dass die Tragfähigkeit verbessert und ein vergrößertes Drehmoment auf das Kegelzahnrad übertragen werden kann.

Diese Aufgaben werden erfindungsgemäß mit den Merkmalen des Anspruchs 1 gelöst.

Die Zahnkopfquerlinie wird gebildet durch den Schnitt, der zur Rotationsachse des Zahnrades senkrechten Schnittebene und der radial am weitest entfernten Zahnfläche (der Zahnkopffläche) des Zahnrades.

Erfindungsgemäß weisen die Zähne eine Materialmehrmenge auf den Lastflanken zur Verstärkung der Lastflanken auf. Unter einer Materialmehrmenge wird hierbei das Vorhandensein von Zahnmaterial verstanden, welches bei Symmetriebetrachtung des Zahnes mithilfe einer radialen Zahnachse, nur auf einer Seite der Symmetrieachse vorhanden ist. Die radiale Zahnachse verläuft erstens durch den Punkt, der auf der Zahnkopfquerlinie liegt und die Zahnquerkopflinie in zwei gleich große Anteile teilt, und zweitens durch den Mittelpunkt des Zahnrades.

Diese Materialmehrmenge ist im unteren bzw. inneren Bereich der Lastflanke, insbesondere innerhalb des unteren Zweidrittels oder des unteren Dreiviertels der Lastflanke angeordnet.

Besonders vorteilhaft ist, wenn die Tangente an einem beliebigen Punkt der Lastflanke, insbesondere am Teilkreis und Wälzkreis, flacher ist als die entsprechende Tangente in der Rückflanke. Die Tangente auf der Lastseite schließt mit der radialen Zahnachse damit einen größeren Winkel (β) ein, als die der Rückflanke.

Der Vorteil eines solchen asymmetrischen Zahnprofiles ist eine vergrößerte Drehmomentübertragung, die durch eine Vergrößerung der Krümmungsradien der Lastflanke eine Verringerung der Flankenpressung bewirkt. Das Risiko einer Zahnschädigung, insbesondere des Flankenbereiches, wird dadurch verringert.

Erfindungsgemäß besteht weiterhin eine mögliche Variabilität des Eingriffswinkels auf der Lastseite entlang der Zahnlängslinie auszuführen. Durch die Wahl eines größeren Eingriffswinkels an der Zahnferse gegenüber der Zahnzehe kann der realisierbare Winkelbereich vergrößert werden. So wirkt man der Gefahr von spitzer werdenden Zähnen, speziell im Zehenbereich, entgegen. Die Eingriffswinkel können entlang der Zahnflanken derart variabel ausgeführt werden, dass von der Zahnferse zur Zahnzehe hin die Eingriffswinkel um einen Betrag in einem Bereich von 0 Grad bis 8 Grad, insbesondere bis zu einen Betrag von 5 Grad, abnehmen.

Vorzugsweise wird vorgeschlagen, die Eingriffswinkel möglichst groß auszuführen, so dass der Eingriffswinkel (α) der Lastflanke 25 bis 45 Grad, vorzugsweise 30 bis 40 Grad, beträgt.

Die Schriften DE 10 2005 016746 A1 und JP 09032908 A zeigen ebenfalls asymmetrische Zahnformen. Im Gegensatz zur vorliegenden Erfindung weisen diese auf der Rückflanke des Zahnes eine Materialmehrmenge auf. Das kommt vorwiegend bei Hypoidverzahnungen zum Einsatz, wo durch einen Achsversatz unterschiedliche Zahnformen entstehen. Eine Materialmehrmenge auf der Rückflanke führt zu keiner Steigerung der Flankentragfähigkeit, kann unter Umständen sogar zu einer Minderung führen. Praktisch wird das bei Hypoidrädern ausgeführt, um die unterschiedlichen Gleit- und Eingriffsverhältnisse zwischen Last- und Rückflanke auszugleichen.

Während die aktuellen klassischen Herstellungsverfahren die Fertigungsfreiheitsgrade limitieren und dahin gehend optimiert sind, mehrere Zähne eines Zahnrades gleichzeitig zu fertigen, kann durch eine punktgenaue Herstellung des Zahnrades mithilfe einer Fräs- oder Schleifmaschine, deren Werkzeug auf vier oder mehr Achsen geführt wird, eine individuellere Gestaltung der Zähne erfolgen.

Dazu zählt auch die Freiheit in der Fertigung der Zahnprofilform. Abgesehen von einer Oktoidenzahnform, dessen Eingriffslinie einer angenäherten Geraden entspricht, ist eine kugelevolventische Zahnform, die zu einer Verbesserung der Verlagerungsunempfindlichkeit beiträgt, herstellbar.

Besonders günstig sind diese Kegelzahnräder bei Großgetrieben einsetzbar, wie sie z. B. bei Ruderpropellerantrieben verwendet werden.

Ausführungsbeispiele der Erfindung sind in den Zeichnungen dargestellt und werden im Folgenden näher beschrieben.
- Figur 1 :: eine Ansicht des Zahnes mit Symmetrieachse und Materialmehrmenge
- Figur 2 :: eine Ansicht des Zahnes entlang der Zahnflanke mit verschiedenen Eingriffswinkeln
- Figur 3 :: eine Schnittansicht des Zahnprofiles mit kleinen Veränderungen der Eingriffswinkel an Zahnferse und Zahnzehe gegenüber dem Bezugsprofil
- Figur 4 :: eine Schnittansicht des Zahnprofiles mit großen Veränderungen der Eingriffswinkel an Zahnferse und Zahnzehe gegenüber dem Bezugsprofil

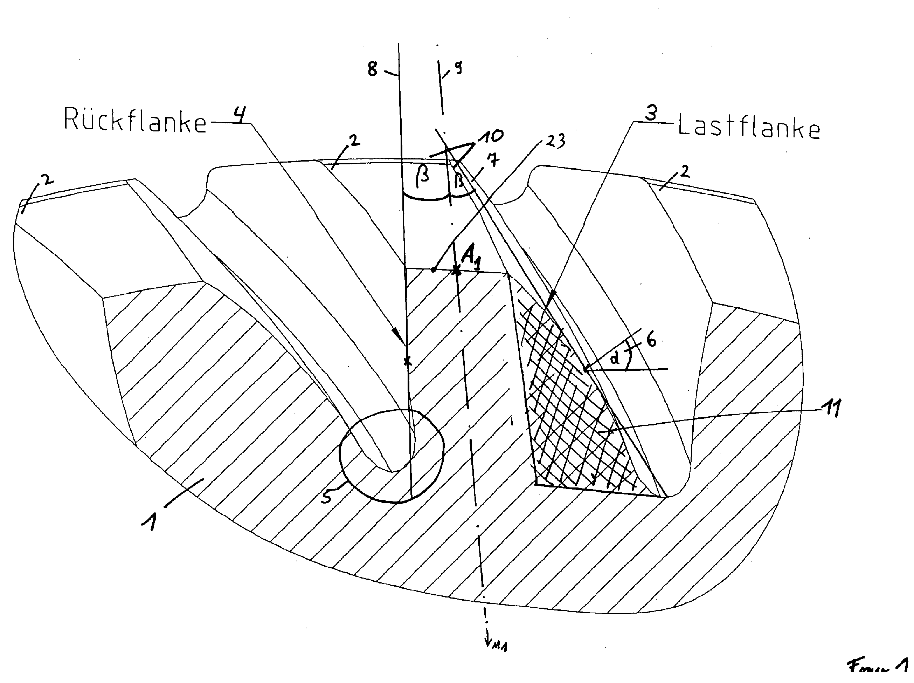

Figur 1 zeigt das Kegelzahnrad 1, welches an seiner Kegelmantelfläche mehrere über den Umfang verteilte Zähne 2 aufweist, die jeweils eine Lastflanke 3 und eine Rückflanke 4 besitzen. Die Lastflanke 3 und die Rückflanke 4 zweier benachbarter Zähne 2 sind durch den Zahnfußbereich 5, auch als "Zahnlückengrund" bezeichnet, verbunden.

Da für die Zahnräder eine Vorzugsdrehrichtung für die Drehmomentübertragung vorgesehen ist, haben Lastflanken 3 und Rückflanken 4 unterschiedliche Funktionen, die in einer unterschiedlichen Geometrie verankert sind.
Die Lastflanke 3 übernimmt die Drehmomentübertragung im Normalbetrieb und ist konstruktiv mit einem großen Eingriffswinkel (a) 6 ausgelegt. Die Eingriffswinkel (α) 6 der Lastflanke 3 betragen hierbei 25 bis 45 Grad, vorzugsweise 30 bis 40 Grad. Die Rückflanke 4 ist mit kleineren Eingriffswinkeln ausgebildet. Aufgrund der flacheren Tangente 7 an einem beliebigen Punkt der Lastflanke 3, hier am Teil- bzw. Wälzkreis dargestellt, gegenüber der entsprechenden Tangente 8 der Rückflanke 4, erhält der Zahn eine asymmetrische Zahngeometrie.

Aufgrund der asymmetrischen Geometrie entfällt bei dieser neuen Zahngestalt die typische Zahnmittellinie, wie sie bei herkömmlicher symmetrischer Zahngeometrie vorhanden ist. Diese wird durch eine "radiale Zahnachse" 9 ersetzt, die durch den Zahnradmittelpunkt M₁ und den zahnkopfhalbierenden Punkt A₁ verläuft. Der zahnkopfhalbierende Punkt A₁ teilt die Zahnkopfquerlinie 23 in zwei gleich große Anteile. Die jeweiligen Tangenten an Last- und Rückflanke schließen mit dieser radialen Zahnachse jeweils unterschiedliche große Winkel β 10 ein. Die Tangente 8 der Rückflanke 4 ist steiler als die Tangente 7 der Lastflanke 3. Somit schließt die Tangente 7 der Lastflanke 3 mit der radialen Zahnachse 9 einen größeren Winkel β 10 ein, als die Tangente 8 der Rückflanke 4 mit der radialen Zahnachse 9.

Zieht man diese radiale Zahnachse 9 für einen Vergleich von Lastflanke 3 und Rückflanke 4 heran, wird die zusätzliche Materialmehrmenge 11 auf der Seite der Lastflanke 3 deutlich. Dabei nimmt die Materialmehrmenge 11 im unteren bzw. inneren Bereich der Verzahnung, also zum Zahnfußbereich 5 hin, deutlich zu. Die Materialmehrmenge 11 der Lastflanke 3 variiert je nach Zahngeometrie und Eingriffswinkel a 6 und lässt sich mit einem Faktor f im Zahlenbereich von größer 1,0 bis 1,5 angeben.

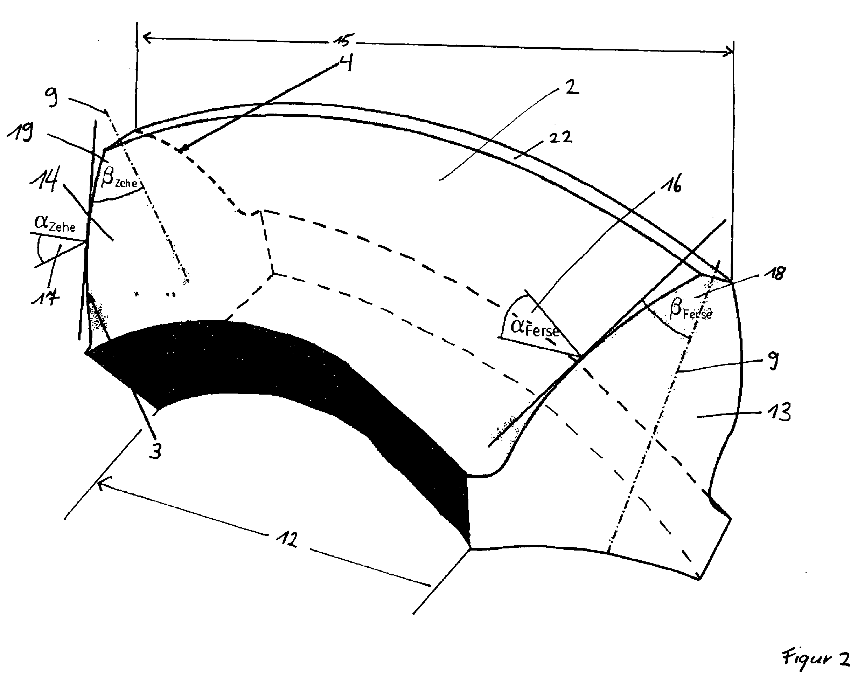

Die Figur 2 zeigt die beispielhafte Ausprägung eines Zahnes 2 entlang der Zahnbreite 12 von Zahnferse 13 hin zur Zahnzehe 14. Die Zahnlänge 15 ist dabei aufgrund der Ausführungsform der Verzahnung mit gekrümmter Zahnlängslinie betragsmäßig größer als die Zahnbreite 12. Die Zeichnung zeigt auf, dass die Eingriffswinkel α 6 an einer Zahnflanke der Zahnferse 13 (Eingriffswinkel α_{Ferse} 16) anders sein können als an der Zahnzehe 14 (Eingriffswinkel α_{Zehe} 17). Der Bereich der Zahnflanke zwischen Zahnferse 13 und Zahnzehe 14 weist somit entlang der Zahnlänge 15 variable Eingriffswinkel α 6 auf, die von der Zahnferse 13 hin zur Zahnzehe 14 entlang der Zahnflanke kleiner werden. Dabei liegt die Differenz der Eingriffswinkel 6 von Zahnferse 16 zu Zahnzehe 17 im Wertebereich von 0 Grad bis 8 Grad, bevorzugt bei 5 Grad. Die Tangente an der Zahnferse 13 verläuft gegenüber der Tangente an der Zahnzehe 14 flacher und schließt somit einen größeren Winkel β_{Ferse} 18 als β_{Zehe} 19 an der Zahnzehe ein.

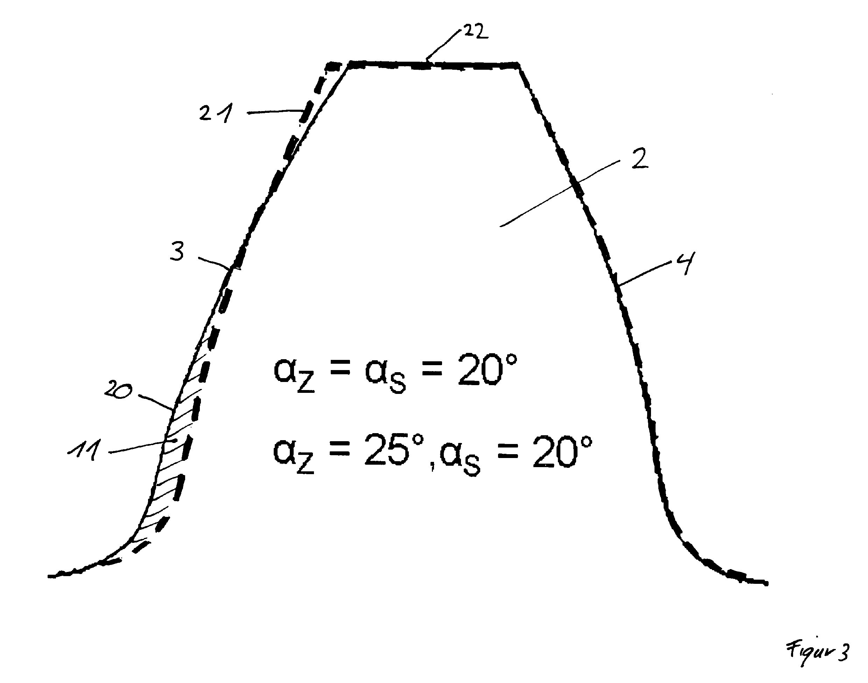

Figur 3 zeigt die optimierte Zahnform 20 mit einer Materialmehrmenge 11. Die Materialmehrmenge 11 ist im unteren bzw. inneren Bereich der Lastflanke 3 angeordnet. Die Materialmehrmenge 11 auf der Lastseite 3 ist im Vergleich zur Materialmenge des gesamten Zahnes verhältnismäßig gering. Dies ist auf die geringe Differenz zwischen den Eingriffswinkeln vom Standardbezugsprofil 21 und der optimierten Zahnform 20 zurückzuführen. Der Eingriffswinkel α 6 im Standardbezugsprofil 21 ist auf der Lastflanke 3 mit α_{z} = 20 Grad und an der Rückflanke 4 mit αₛ = 20 Grad gleich. Der Eingriffswinkel α 6 der optimierten Zahnform 20 ist an der Lastflanke 3 mit α_{z} = 25 Grad und an der Rückflanke 4 mit αₛ = 20 Grad unterschiedlich.

Die Figur 3 zeigt weitergehend die optimierte Zahnform 20 der Zähne 2 in Ausführungsform einer Kugelevolvente. Diese Ausführungsform kann mit der vorgeschlagenen Zahngeometrie nicht durch klassische Fertigungsverfahren, wie Wälzfräsen oder Schaben hergestellt werden. Die optimierte Zahnform kann aber durch ein vier- oder Mehrachsverfahren, im Besonderen dem Fünfachsverfahren gefertigt werden. Nur hierdurch kann das Werkzeug punktgenau die dreidimensionale Materialabtragung vornehmen, die für die optimierte Zahnform 20 der Zähne 2 erforderlich ist. Die Fertigungsverfahren sind hierbei insbesondere Schleifen und / oder Fräsen.

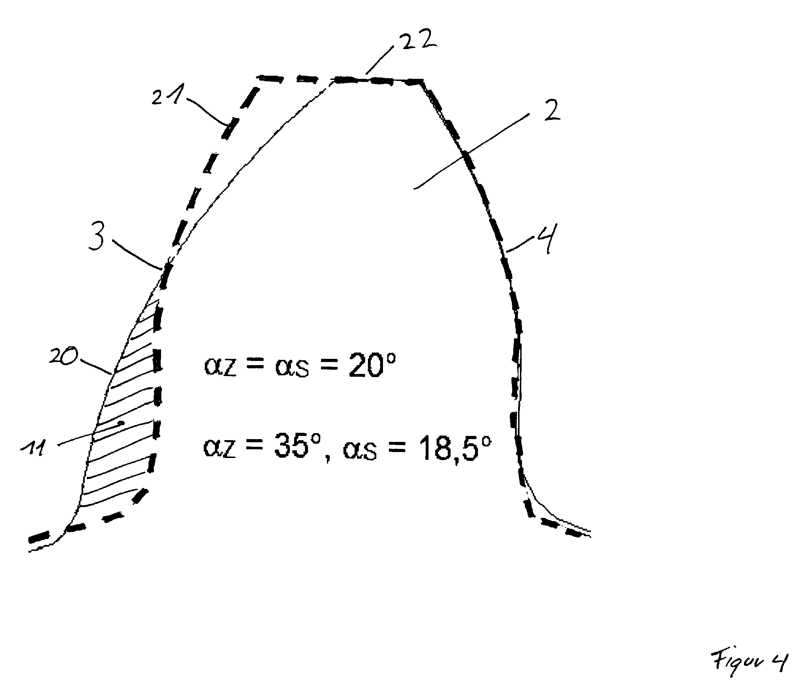

Die Figur 4 zeigt eine andere Ausprägung der Zahnflanke mit einer deutlich größeren Materialmehrmenge 11 als in Figur 3 dargestellt. Dies ist auf die größere Differenz zwischen den Eingriffswinkeln vom Standardbezugsprofil 21 und der optimierten Zahnform 20 zurückzuführen. Der Eingriffswinkel α 6 im Standardbezugsprofil 21 ist auf der Lastflanke 3 mit α_{z} = 20 Grad und an der Rückflanke 4 mit αₛ = 20 Grad gleich. Der Eingriffswinkel α 6 der optimierten Zahnform 20 ist an der Lastflanke 3 mit α_{z} = 35 Grad und an der Rückflanke 4 mit αₛ = 18,5 Grad unterschiedlich. Figur 4 zeigt hierbei, dass mit Vergrößerung des Eingriffswinkels α 6 die Kopfdicke des Zahnkopfes 22 geringer werden kann. Die Figur vergleicht hierbei die optimierte Zahnform 20 mit dem Zahnkopf eines Standardbezugsprofiles 21. Die Figur 4 zeigt ebenfalls die optimierte Zahnform 20 der Zähne 2 in Ausführungsform einer Kugelevolvente auf der Lastseite 3 des Zahnes 2.

Eine nicht dargestellte Ausführungsvariante hat derart große Eingriffswinkel, dass es erforderlich ist, eine Berandungsmodifikation im Bereich des Zahnkopfes vorzunehmen. So soll eine Durchhärtung vermieden werden, die im Allgemeinen unterhalb einer Zahndicke 0,3 x m auftreten kann. Das ist wichtig, um Zahnkopfschäden zu vermeiden. Eine solche Berandungsmodifikation kann als eine variable Kopfverrundung entlang der Zahnkopflängslinie oder als eine kegelige Kopfkürzung an der Zahnzehe vorgenommen werden.

Eine weitere nicht dargestellte Ausführungsform beinhaltet die Anordnung der Materialmehrmenge 11 innerhalb, des unteren Zweidrittels oder des unteren Dreiviertels der Lastflanke 3.

## Patentansprüche

1. Kegelzahnrad (1) eines Kegelradgetriebes, dessen Zähne (2) jeweils eine Lastflanke (3) und eine Rückflanke (4) aufweisen, wobei
• die Zähne (2) eine schrägverzahnte oder bogenverzahnte Flankenlinie aufweisen, wobei
• die Zähne (2) eine Oktoidenzahnform oder eine Kugelevolventenzahnform aufweisen und wobei
• die Zähne eine Materialmehrmenge (11) auf den Lastflanken (4) zur Verstärkung der Lastflanken (4) aufweisen, so dass die Achse (9), welche durch den zahnkopfhalbierenden Punkt A₁ der Zahnkopfquerlinie (23) und durch den Mittelpunkt des Zahnrades verläuft, eine Asymmetrie der Zähne (2) aufzeigt, **dadurch gekennzeichnet,**
• **dass** die Eingriffswinkel (6) der Zahnflanken entlang der Zähne (2) derart variabel sind, dass die Eingriffswinkel (6) der Zahnflanken entlang der Zähne (2) von der Zahnferse (13) zur Zahnzehe (14) hin abnehmen.

2. Kegelzahnrad (1) nach Anspruch 1, **dadurch gekennzeichnet, dass** die Zähne (2) die eine schrägverzahnte oder bogenverzahnte Flankenlinie aufweisen, eine gekrümmte Zahnlängslinie aufweisen.

3. Kegelzahnrad (1) nach einem der vorherigen Ansprüche, **dadurch gekennzeichnet, dass** der obere in Eingriff kommende Bereich der Zähne, eine Oktoidenzahnform oder eine Kugelevolventenzahnform aufweist

4. Kegelzahnrad (1) nach einem der vorherigen Ansprüche, **dadurch gekennzeichnet, dass** die Eingriffswinkel (6) der Zahnflanken entlang der Zähne (2) derart variabel sind, das von der Zahnferse (13) zur Zahnzehe (14) hin die Eingriffswinkel (6) um einem Betrag in einem Bereich von 0° bis 8°, insbesondere bis zu einem Betrag von 5°, abnehmen.

5. Kegelzahnrad (1) nach einem der vorherigen Ansprüche, **dadurch gekennzeichnet, dass** die Eingriffswinkel α (6) der Lastflanke (3) 25 bis 45 Grad, vorzugsweise 30 bis 40 Grad, beträgt.

6. Kegelzahnrad (1) nach einem der vorherigen Ansprüche, **dadurch gekennzeichnet, dass** die Materialmehrmenge (11) im unteren bzw. inneren Bereich der Lastflanke (3) angeordnet ist.

7. Kegelzahnrad (1) nach einem der vorherigen Ansprüche, **dadurch gekennzeichnet, dass** die Materialmehrmenge (11) innerhalb, des unteren Zweidrittels oder des unteren Dreiviertels der Lastflanke (3) angeordnet ist.

8. Kegelzahnrad (1) nach einem der vorherigen Ansprüche, **dadurch gekennzeichnet, dass** die Tangente (7) an einem beliebigen Punkt der Lastflanke (3), insbesondere am Teilkreis und Wälzkreis, flacher ist als die entsprechende Tangente der Rückflanke (4) und damit die Tangente (7) mit der radialen Zahnachse (9) einen größeren Winkel β (10) einschließt als auf der Rückflanke (4).

9. Kegelzahnrad (1) nach einem der vorherigen Ansprüche, **dadurch gekennzeichnet, dass** das Zahnrad ein Modul m im Bereich von 3 bis 30 aufweist.

10. Kegelzahnrad (1) nach einem der vorherigen Ansprüche, **dadurch gekennzeichnet, dass** der Zahnkopf (22) eine Berandungsmodifikation, insbesondere eine variable Kopfverrundung entlang der Zahnkopflängslinie oder eine Kopfkürzung an der Zahnzehe aufweist, um eine Zahnkopfdicke von größer 0,3 x m zu gewährleisten.

11. Verfahren zur Herstellung eines Kegelzahnrades (1) nach einem der vorherigen Ansprüche, **dadurch gekennzeichnet, dass** die Zahngeometrie durch ein vier- oder Mehrachsverfahren, im besonderen Fünfachsverfahren gefertigt wird.

12. Verfahren zur Herstellung eines Kegelzahnrades (1) nach einem der vorherigen Ansprüche, **dadurch gekennzeichnet, dass** die herstellenden Fertigungsverfahren Schleifen und / oder Fräsen sind.

13. Verfahren zur Herstellung eines Kegelzahnrades (1) nach einem der vorherigen Ansprüche, **dadurch gekennzeichnet, dass** die Zahngeometrie durch punktgenaue dreidimensionale Materialabtragung hergestellt wird.

14. Verfahren zur Herstellung eines Kegelzahnrades (1) nach einem der vorherigen Ansprüche, **dadurch gekennzeichnet, dass** durch die punktgenauen Materialabtragung der Zahnflanken der Zähne (2) diese, insbesondere der in Eingriff kommenden Bereiche, die Form einer Kugelevolvente erhalten.

15. Verfahren zur Herstellung eines Kegelradgetriebes nach einem der vorhergehenden Ansprüche, **dadurch gekennzeichnet, dass** es zur Herstellung von Schiffsantriebsgetrieben, insbesondere Ruderpropellergetriebe, vorzugsweise als Unterwassergetriebe des Gondelantriebes, verwendet wird.

## Claims

1. Bevel gearwheel (1) of a bevel gear, the teeth (2) of which have in each case a load flank (3) and a rear flank (4),
• the teeth (2) having a helically toothed or spirally toothed flank line,
• the teeth (2) having an octoidal tooth shape or a spherically involute tooth shape, and
• the teeth having an extra quantity of material (11) on the load flanks (3) for reinforcing the load flanks (3), so that the axis (9) which runs through the tooth tip-bisecting point A₁ of the tooth-tip transverse line (23) and through the mid-point of the gearwheel has an asymmetry of the teeth (2),
**characterized**
• **in that** the pressure angles (6) of the tooth flanks along the teeth (2) are variable in such a way that the pressure angles (6) of the tooth flanks along the teeth (2) decrease from the tooth heel (13) towards the tooth toe (14).

2. Bevel gearwheel (1) according to Claim 1, **characterized in that** the teeth (2) which have a helically toothed or spirally toothed flank line have a curved tooth longitudinal line.

3. Bevel gearwheel (1) according to one of the preceding claims, **characterized in that** the upper, engaging region of the teeth has an octoidal tooth shape or a spherically involute tooth shape.

4. Bevel gearwheel (1) according to one of the preceding claims, **characterized in that** the pressure angles (6) of the tooth flanks along the teeth (2) are variable in such a way that the pressure angles (6) decrease by an amount in a range of 0° to 8°, in particular up to an amount of 5°, from the tooth heel (13) towards the tooth toe (14).

5. Bevel gearwheel (1) according to one of the preceding claims, **characterized in that** the pressure angle α (6) of the load flank (3) amounts to 25 to 45 degrees, preferably 30 to 40 degrees.

6. Bevel gearwheel (1) according to one of the preceding claims, **characterized in that** the extra quantity of material (11) is arranged in the lower or inner region of the load flank (3).

7. Bevel gearwheel (1) according to one of the preceding claims, **characterized in that** the extra quantity of material (11) is arranged within the lower two thirds or the lower three quarters of the load flank (3).

8. Bevel gearwheel (1) according to one of the preceding claims, **characterized in that** the tangent (7) to any point on the load flank (3), in particular on the reference circle and pitch circle, is flatter than the corresponding tangent to the rear flank (4), and therefore the tangent (7) forms a larger angle P (10) with the radial tooth axis (9) than on the rear flank (4).

9. Bevel gearwheel (1) according to one of the preceding claims, **characterized in that** the gearwheel has a modulus m in the range of 3 to 30.

10. Bevel gearwheel (1) according to one of the preceding claims, **characterized in that** the tooth tip (22) has a marginal modification, in particular a variable tip rounding along the tooth-tip longitudinal line or a tip shortening at the tooth toe, in order to ensure a tooth-tip thickness greater than 0.3 × m.

11. Method for producing a bevel gearwheel (1) according to one of the preceding claims, **characterized in that** the tooth geometry is manufactured by means of a four-axis or multi-axis method, in particular a five-axis method.

12. Method for producing a bevel gearwheel (1) according to one of the preceding claims, **characterized in that** the productive methods of manufacture are grinding and/or milling.

13. Method for producing a bevel gearwheel (1) according to one of the preceding claims, **characterized in that** the tooth geometry is produced by means of point-accurate three-dimensional material removal.

14. Method for producing a bevel gearwheel (1) according to one of the preceding claims, **characterized in that**, as a result of the point-accurate material removal of the tooth flanks of the teeth (2), the latter, in particular in the engaging regions, acquire the shape of a spherical involute.

15. Method for producing a bevel gear according to one of the preceding claims, **characterized in that** it is used for the production of ship's drive gears, in particular rudder propeller gears, preferably as an underwater gear of the gondola drive.

## Revendications

1. Pignon conique (1) d'un engrenage à pignons coniques, dont les dents (2) présentent à chaque fois un flanc de charge (3) et un flanc arrière (4),
- les dents (2) présentant une ligne de flanc à denture oblique ou à denture courbe,
- les dents (2) présentant une forme de dent octoïde ou une forme de dent à développante sphérique et
- les dents présentant une quantité excessive de matériau (11) sur les flancs de charge (3) pour renforcer les flancs de charge (3), de telle sorte que l'axe (9) qui s'étend à travers le point A₁ bissecteur de la tête de dent de l'axe transversal de la tête de dent (23) et à travers le centre du pignon mette en évidence une asymétrie des dents (2),
**caractérisé en ce que**
- les angles d'engagement (6) des flancs de dents le long des dents (2) sont variables de telle sorte que les angles d'engagement (6) des flancs de dents le long des dents (2) diminuent depuis la base des dents (13) jusqu'à la pointe des dents (14).

2. Pignon conique (1) selon la revendication 1, **caractérisé en ce que** les dents (2) qui présentent une ligne de flanc à denture oblique ou à denture courbe présentent une ligne longitudinale de dent courbe.

3. Pignon conique (1) selon l'une quelconque des revendications précédentes, **caractérisé en ce que** la région d'engagement supérieure des dents présente une forme de dent octoïde ou une forme de dent à développante sphérique.

4. Pignon conique (1) selon l'une quelconque des revendications précédentes, **caractérisé en ce que** les angles d'engagement (6) des flancs de dents le long des dents (2) sont variables de telle sorte que de la base des dents (13) à la pointe des dents (14), les angles d'engagement (6) diminuent dans une plage comprise entre 0° et 8°, notamment jusqu'à une valeur de 5°.

5. Pignon conique (1) selon l'une quelconque des revendications précédentes, **caractérisé en ce que** l'angle d'engagement α (6) du flanc de charge (3) vaut 25 à 45 degrés, de préférence 30 à 40 degrés.

6. Pignon conique (1) selon l'une quelconque des revendications précédentes, **caractérisé en ce que** la quantité excessive de matériau (11) est disposée dans la région inférieure ou intérieure du flanc de charge (3).

7. Pignon conique (1) selon l'une quelconque des revendications précédentes, **caractérisé en ce que** la quantité excessive de matériau (11) est disposée à l'intérieur du deuxième tiers inférieur ou des trois quarts inférieurs du flanc de charge (3).

8. Pignon conique (1) selon l'une quelconque des revendications précédentes, **caractérisé en ce que** la tangente (7) en un point quelconque du flanc de charge (3), en particulier au niveau du cercle partiel et du cercle primitif, est plus plate que la tangente correspondante du flanc arrière (4) et donc la tangente (7) forme avec l'axe radial des dents (9) un plus grand angle β (10) que sur le flanc arrière (4).

9. Pignon conique (1) selon l'une quelconque des revendications précédentes, **caractérisé en ce que** le pignon présente un module m dans une plage de 3 à 30.

10. Pignon conique (1) selon l'une quelconque des revendications précédentes, **caractérisé en ce que** la tête de dent (22) présente une modification du bord, notamment un arrondi variable de la tête le long de la ligne longitudinale de dent ou un raccourcissement de la tête au niveau de la pointe de dent, afin de garantir une épaisseur de dent supérieure à 0,3 x m.

11. Procédé de fabrication d'un pignon conique (1) selon l'une quelconque des revendications précédentes, **caractérisé en ce que** la géométrie des dents est fabriquée par un procédé à quatre ou plusieurs axes, en particulier un procédé à cinq axes.

12. Procédé de fabrication d'un pignon conique (1) selon l'une quelconque des revendications précédentes, **caractérisé en ce que** les procédés de fabrication sont un meulage et/ou un fraisage.

13. Procédé de fabrication d'un pignon conique (1) selon l'une quelconque des revendications précédentes, **caractérisé en ce que** la géométrie des dents est fabriquée par enlèvement de matière tridimensionnel de précision.

14. Procédé de fabrication d'un pignon conique (1) selon l'une quelconque des revendications précédentes, **caractérisé en ce que** par l'enlèvement de matière de précision des flancs de dents des dents (2), ceux-ci, en particulier les régions d'engagement, acquièrent la forme d'une développante sphérique.

15. Procédé de fabrication d'un engrenage à pignons coniques selon l'une quelconque des revendications précédentes, **caractérisé en ce qu'**il est utilisé pour fabriquer des engrenages de transmissions de bateaux, en particulier des engrenages d'hélices de gouvernail, de préférence sous forme d'engrenages sous-marins pour l'entraînement de nacelles.
